# EUROPEAN PATENT APPLICATION

(11) **EP 4 813 906 A1**
(43) Date of publication of application: **30.09.2026**
(21) Application number: 24918242.9
(22) Date of filing: 02.12.2024
(51) Int. Cl.: B66F 9/12, B66F 9/075, B65G 1/04

(54) **FORK ASSEMBLY, TRANSFER ROBOT, AND WAREHOUSING SYSTEM**

(30) Priority: 18.01.2024 CN 202410077332
(71) Applicant: Hai Robotics Co., Ltd., Shenzhen, Guangdong 518000 (CN)
(72) Inventor: CAO, Huxing, Shenzhen, Guangdong 518000 (CN); LI, Yaming, Shenzhen, Guangdong 518000 (CN)
(74) Representative: Gulde & Partner
(86) International application number: PCT/CN2024/136233
(87) International publication number: WO 2025/152634

(57) **Abstract**

This application provides a fork assembly, a transport robot, and a warehousing system, and relates to the field of intelligent warehousing technologies, to resolve a technical problem that a telescopic mechanism is prone to shaking and has poor stability during telescoping. The fork assembly includes a base, a mounting plate, a telescopic mechanism, a guiding structure, a first drive mechanism, and a picking mechanism. The mounting plate is disposed on the base, one end of the telescopic mechanism is pivotally connected to the mounting plate, and the picking mechanism is disposed at one end of the telescopic mechanism facing away from the mounting plate. The guiding structure includes a first guide rail and a second guide rail, where the second guide rail extends along a first direction, the first guide rail extends along a second direction, and the first guide rail is slidably connected to the second guide rail. The telescopic mechanism is slidably connected to the first guide rail. The first drive mechanism is configured to drive the first guide rail to move along the second guide rail, to drive the telescopic mechanism to telescope. This application can improve the telescopic stability of the telescopic mechanism in the fork assembly and the accuracy of a telescoping path, thereby reducing shaking.

## Description

### CROSS-REFERENCES

This application claims priority to Chinese Patent Application No. 202410077332.3, filed with the China National Intellectual Property Administration on January 18, 2024 and entitled "FORK ASSEMBLY, TRANSPORT ROBOT, AND WAREHOUSING SYSTEM", which is incorporated herein by reference in its entirety.

### TECHNICAL FIELD

This application relates to the field of fork technologies, and in particular, to a fork assembly, a transport robot, and a warehousing system.

### BACKGROUND OF THE INVENTION

With the rapid development of artificial intelligence, automation, and information technologies, the level of intelligence in logistics has been continuously increasing. Transport robots and similar equipment are among the equipment that achieves intelligent logistics, to reduce the heavy physical labor of humans.

In the related art, a transport robot includes a fork assembly. The fork assembly includes a telescopic mechanism and a picking mechanism. The picking mechanism is disposed at one end of the telescopic mechanism. The telescopic mechanism can move telescopically along the tote's picking direction, allowing the picking mechanism to pull a tote from a storage location on a rack back onto the fork or place a tote onto a storage location on a rack, thereby achieving the picking and placing the tote.

However, in the related art, the telescopic mechanism in the fork assembly is prone to shaking during telescoping, resulting in insufficient accuracy and poor stability.

### SUMMARY OF THE INVENTION

In view of the foregoing problem, embodiments of this application provide a fork assembly, a transport robot, and a warehousing system, to improve the telescopic stability of a telescopic mechanism in the fork assembly and the accuracy of a telescoping path, thereby reducing shaking.

To achieve the foregoing objective, the embodiments of this application provide the following technical solutions.

A first aspect of the embodiments of this application provides a fork assembly, including:
a base;
a mounting plate disposed on the base;
a telescopic mechanism including a first telescopic unit and at least one second telescopic unit that are sequentially pivotally connected, where the first telescopic unit includes two first telescopic frames, one end of each of the two first telescopic frames being pivotally connected to the mounting plate; and the second telescopic unit includes two second telescopic frames, the two second telescopic frames being crosswise arranged and pivotally connected to each other;
a guiding structure including a first guide rail and a second guide rail, where the second guide rail is connected to the base and extends along a first direction, and the first guide rail extends along a second direction and is slidably connected to the second guide rail; and the second telescopic unit is slidably connected to the first guide rail, where the first direction and the second direction are perpendicular to each other;
a first drive mechanism connected to the first guide rail, where the first drive mechanism is configured to drive the first guide rail to move along the second guide rail, to cause the second telescopic unit to slide along the first guide rail, to drive the telescopic mechanism to telescope along the first direction; and
a picking mechanism disposed on a side of the second telescopic unit facing away from the first telescopic unit.

Compared with the related art, the fork assembly provided in the embodiments of this application has at least the following advantages.

The fork assembly provided in the embodiments of this application includes: a base, a mounting plate, a telescopic mechanism, a guiding structure, a first drive mechanism, and a picking mechanism. The mounting plate is disposed on the base, the telescopic mechanism includes a first telescopic unit and at least one second telescopic unit that are sequentially pivotally connected, where the first telescopic unit includes two first telescopic frames, one end of each of the two first telescopic frames being pivotally connected to the mounting plate; and the second telescopic unit includes two second telescopic frames, the two second telescopic frames being crosswise arranged and pivotally connected to each other. The guiding structure includes a first guide rail and a second guide rail, where the second guide rail extends along a first direction, and the first guide rail extends along a second direction and is slidably connected to the second guide rail; and the second telescopic unit is slidably connected to the first guide rail. The first drive mechanism is connected to the first guide rail, where the first drive mechanism is configured to drive the first guide rail to move along the second guide rail, to cause the second telescopic unit to slide along the first guide rail, to drive the telescopic mechanism to telescope along the first direction. The picking mechanism is disposed on a side of the second telescopic unit facing away from the first telescopic unit. In the foregoing solution, the guiding structure is provided to guide the telescopic movement of the telescopic mechanism in the first direction, to prevent the telescopic mechanism from laterally deviating during telescoping, thereby improving the stability, reliability, and accuracy of the telescopic mechanism during telescoping, reducing shaking, and further improving the reliability of the picking mechanism when picking up a tote.

A second aspect of the embodiments of this application provides a transport robot, including: a robot body and the fork assembly according to the foregoing embodiment. The fork assembly is disposed on the robot body, and the fork assembly can move up and down relative to the robot body.

A third aspect of the embodiments of this application provides a warehousing system, including the transport robot according to the foregoing embodiment.

The transport robot and the warehousing system provided in the embodiments of this application have the same beneficial effects as the fork assembly provided in the foregoing embodiment, and details are not described herein again.

In addition to the technical problems resolved through the embodiments of this application described above, the technical features constituting the technical solutions, and the beneficial effects brought about by the technical features of these technical solutions, other technical problems that can be resolved through the fork assembly, the transport robot, and the warehousing system provided in the embodiments of this application, other technical features included in the technical solutions, and the beneficial effects brought about by these technical features are to be further described in detail in detailed description.

### BRIEF DESCRIPTION OF DRAWINGS

To describe technical solutions in embodiments of this application or in the related art more clearly, the following briefly describes accompanying drawings required for describing the embodiments or the related art. Apparently, the accompanying drawings in the following descriptions show some embodiments of this application, and a person of ordinary skill in the art may still derive other drawings from these accompanying drawings without creative efforts.
FIG. 1 is a schematic structural diagram of a fork assembly according to an embodiment of this application;
FIG. 2 is a schematic diagram of a partial structure of the fork assembly according to an embodiment of this application;
FIG. 3 is a schematic diagram of another view of a partial structure of the fork assembly according to an embodiment of this application;
FIG. 4 is a partial enlarged view of portion A in FIG. 3;
FIG. 5 is a schematic structural diagram of another partial structure of the fork assembly according to an embodiment of this application;
FIG. 6 is a schematic exploded view of still another partial structure of the fork assembly according to an embodiment of this application;
FIG. 7 is a schematic diagram of still another view of a partial structure of the fork assembly according to an embodiment of this application;
FIG. 8 is a partial enlarged view of portion B in FIG. 7;
FIG. 9 is a schematic diagram of yet another view of a partial structure of the fork assembly according to an embodiment of this application;
FIG. 10 is a partial enlarged view of portion C in FIG. 9; and
FIG. 11 is a schematic structural diagram of a transport robot according to an embodiment of this application.

### List of reference signs:

100-fork assembly; 110-base; 120-mounting plate; 130-telescopic mechanism;
131-first telescopic unit; 1311-first telescopic frame;
1311a-first link; 1311b-first connecting rib;
132-second telescopic unit; 1312-second telescopic frame;
1312a-second link; 1312b-second connecting rib; 134-pivot shaft;
140-guiding structure; 141-first guide rail; 142-second guide rail; 143-sliding member;
150-first drive mechanism; 151-first drive motor; 152-flexible assembly; 1521-driving pulley;
1522-driven pulley; 1523-transmission belt; 153-connecting member; 1531-connecting body;
1532-connecting portion; 1533-sliding portion;
160-fixing plate; 161-second drive mechanism; 1611-second drive motor;
1612-lifting unit; 1612a-driving belt pulley; 1612b-driven belt pulley; 1612c-conveyor belt;
162-support member; 170-picking mechanism; 180-tray; 191-first bearing; 192-second bearing;
X-first direction; Y-second direction; Z-third direction;
200-transport robot; 210-robot body; 211-chassis; 212-support frame; and 213-pallet plate.

### DETAILED DESCRIPTION

In the related art, a transport robot includes a fork assembly. The fork assembly includes a telescopic mechanism and a picking mechanism. The picking mechanism is disposed at one end of the telescopic mechanism. The telescopic mechanism can move telescopically along the tote's picking direction, allowing the picking mechanism to pull a tote from a storage location on a rack back onto the fork or place a tote onto a storage location on a rack, thereby achieving the picking and placing of the tote. However, in the related art, the telescopic mechanism in the fork assembly is prone to shaking during telescoping, resulting in insufficient accuracy and poor stability.

To at least partially resolve the foregoing problem, this application provides a fork assembly, a transport robot, and a warehousing system. A guiding structure is designed in the fork assembly to guide the telescopic movement of the telescopic mechanism in a first direction, to prevent the telescopic mechanism from laterally deviating during telescoping, thereby improving the stability, reliability, and accuracy of the telescopic mechanism during telescoping, reducing shaking, and further improving the reliability of the picking mechanism when picking up a tote.

To make the objectives, features, and advantages of the embodiments of this application clearer and easier to understand, the technical solutions of the embodiments of this application are to be clearly and completely described below with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

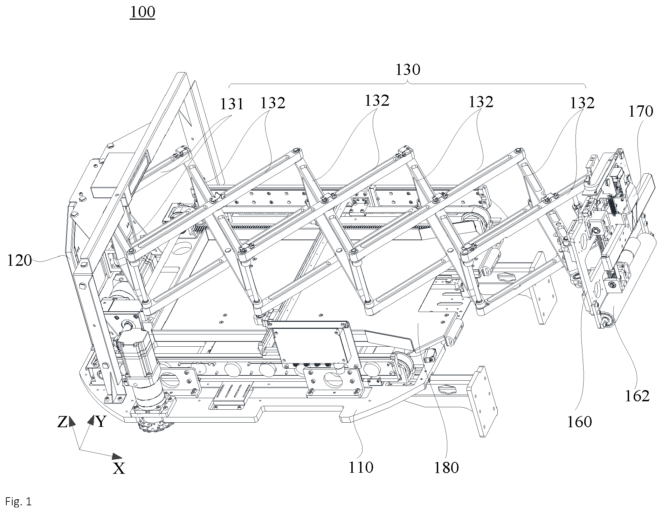

Referring to FIG. 1 to FIG. 5, an embodiment of this application provides a fork assembly 100, including a base 110, a mounting plate 120, a telescopic mechanism 130, a guiding structure 140, a first drive mechanism 150, and a picking mechanism 170. The mounting plate 120 is disposed on the base 110. For example, the mounting plate 120 is disposed at an end portion of one end of the base 110. One end of the telescopic mechanism 130 is pivotally connected to the mounting plate 120. For example, the telescopic mechanism 130 includes a first telescopic unit 131 and at least one second telescopic unit 132 that are sequentially pivotally connected. The picking mechanism 170 is disposed at one end of the telescopic mechanism 130 away from the mounting plate 120. The guiding structure 140 includes a first guide rail 141 and a second guide rail 142. The second guide rail 142 is, for example, disposed on a side of the telescopic mechanism 130 and connected to the base 110. The second guide rail 142 extends along a first direction, the first guide rail 141 extends along a second direction, an end of the first guide rail 141 is slidably connected to the second guide rail 142, and the second telescopic unit 132 is slidably connected to the first guide rail 141. The first drive mechanism 150 is connected to the first guide rail 141. The first drive mechanism 150 is configured to drive the first guide rail 141 to move along the second guide rail 142, and cause the second telescopic unit 132 to slide along the first guide rail 141, to drive the telescopic mechanism 130 to telescope along the first direction. In this way, the guiding structure 140 can guide the telescopic mechanism 130 in a telescopic direction, to prevent the telescopic mechanism 130 from laterally deviating during telescoping, thereby improving the stability of the telescopic mechanism 130 during telescoping and the accuracy of a telescoping path, reducing shaking of the telescopic mechanism 130 during telescoping, and further improving the reliability of the picking mechanism 170 when picking up a tote.

It should be noted that the first direction is a telescopic direction of the telescopic mechanism 130, for example, a direction X in FIG. 1. The second direction is a direction perpendicular to the first direction, for example, a direction Y in FIG. 1. A lifting direction of the picking mechanism 170 is a third direction, for example, a direction Z in FIG. 1.

In some embodiments, the first telescopic unit 131 includes two first telescopic frames 1311, where an end portion of one end of each of the two first telescopic frames 1311 is pivotally connected to the mounting plate 120, so that the two first telescopic frames 1311 move toward or away from the mounting plate 120 about a pivot point at which the mounting plate 120 is pivotally connected.

In some embodiments, end portions of ends of the two first telescopic frames 1311 close to the mounting plate 120 are pivotally connected to each other and pivotally connected to the mounting plate 120. For example, a hinge is provided on the mounting plate 120, and the end portions of the ends of the two first telescopic frames 1311 close to the mounting plate 120 are pivotally connected to each other and pivotally connected to the hinge on the mounting plate 120. As a result, no slide rail mechanism needs to be disposed on the mounting plate 120, and two ends of the two first telescopic frames 1311 do not need to be slidably connected to the slide rail mechanism on the mounting plate 120 through, for example, hinge sliding members, thereby saving the hinge sliding members and the slide rail mechanism. In this way, when the telescopic mechanism 130 is mounted on the mounting plate 120, the thickness of the hinge sliding members and the slide rail mechanism is reduced, thereby reducing a length of the telescopic mechanism 130 in an initial state in the telescopic direction. Since an overall length of the fork assembly 100 affects a width of aisles in a warehousing space, the space utilization of the warehousing space is improved.

In addition, the second telescopic unit 132 includes two second telescopic frames 1312, where the two second telescopic frames 1312 are crosswise arranged and pivotally connected to each other. For example, middle portions of the two second telescopic frames 1312 are pivotally connected to each other. For example, two ends of each of the second telescopic frames 1312 are symmetrical with respect to a pivot point, and the same ends of the two second telescopic frames 1312 are respectively pivotally connected to adjacent structures. For example, ends of the two second telescopic frames 1312 close to the first telescopic unit 131 are respectively pivotally connected to end portions of the corresponding two first telescopic frames 1311. In this way, during telescoping of the telescopic mechanism 130, under an external driving force, the two second telescopic frames 1312 in the second telescopic unit 132 rotate about the pivot point, to move toward or away from each other, thereby achieving telescoping.

In an embodiment, the telescopic mechanism 130 includes one, two, or more second telescopic units 132. By way of example and not limitation, as shown in FIG. 1, one end of the second telescopic unit 132 closest to the mounting plate 120 (that is, the leftmost second telescopic unit 132) is pivotally connected to one end of the first telescopic unit 131, and the other end is pivotally connected to one end of an adjacent right-side second telescopic unit 132. One end of the second telescopic unit 132 closest to the picking mechanism 170 is connected to the picking mechanism 170, and the other end is connected to one end of an adjacent left-side second telescopic unit 132. Two ends of a middle second telescopic unit 132 are respectively pivotally connected to adjacent second telescopic units 132.

It may be understood that middle portions of the two second telescopic frames 1312 in the same second telescopic unit 132 are pivotally connected to each other, that is, in a cross-scissor shape. In this way, the first telescopic unit 131 and the at least one second telescopic unit 132 that are sequentially pivotally connected to each other form a scissor-like telescopic mechanism 130, so that the entire telescopic mechanism 130 can telescope along the first direction by driving only one telescopic frame in one telescopic unit to move along the first direction, resulting in a simple structure and low cost.

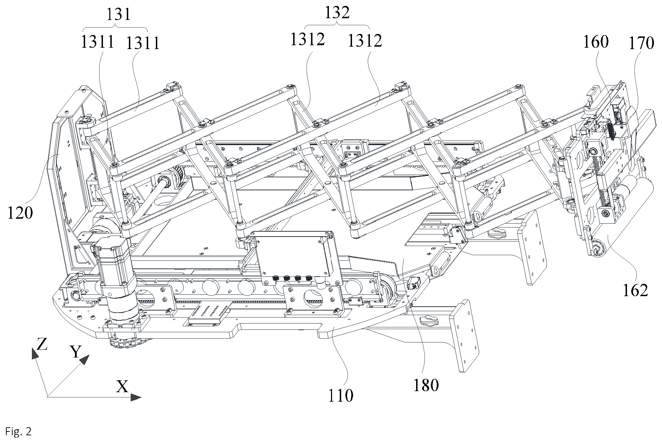

For example, as shown in FIG. 2, end portions of the two first telescopic frames 1311 are rotatably connected (for example, pivotally connected) to each other and pivotally connected to hinges on the mounting plate 120. In this way, the two first telescopic frames 1311 can rotate relative to each other, so that an angle between the two first telescopic frames 1311 varies from 0° to 180°. In addition, the two second telescopic frames 1312 in each second telescopic unit 132 are crosswise arranged. For example, the two second telescopic frames 1312 are symmetrically crosswise arranged, that is, the crossing position of the two second telescopic frames 1312 is at the center of symmetry of the two second telescopic frames 1312. In other words, the middle portions of the two second telescopic frames 1312 are pivotally connected to each other, and end portions of the two second telescopic frames 1312 are respectively pivotally connected to adjacent structures. In this way, the telescopic mechanism 130 forms, for example, a telescopic mechanism 130 of a cross-scissor structure. When the first drive mechanism 150 drives any second telescopic frame 1312 to move along the first direction through the first guide rail 141, the entire telescopic mechanism 130 can telescopically move along the first direction, resulting in a simple driving manner, a simple telescopic structure, and low cost.

A length of the first telescopic frame 1311 is, for example, half of a length of the second telescopic frame 1312. In this way, the end portions of the two first telescopic frames 1311 are pivotally connected to each other and pivotally connected to the mounting plate 120, so that mutual interference between adjacent telescopic frames can be avoided while an initial length of the telescopic mechanism 130 is reduced.

To improve the guiding stability of the telescopic mechanism 130, in this embodiment of this application, the guiding structure 140 may include two second guide rails 142, and the two second guide rails 142 are respectively disposed on opposite sides of the telescopic mechanism 130. In this way, two ends of the first guide rail 141 are respectively slidably connected to the two second guide rails 142, and the same ends of the second telescopic unit 132 are respectively slidably connected to the first guide rail 141. For example, the same ends of the two second telescopic frames 1312 of the second telescopic unit 132 (for example, the ends both close to or away from the mounting plate 120) are respectively slidably connected to the first guide rail 141. In this way, when the first drive mechanism 150 drives the first guide rail 141 to move, two ends of the first guide rail 141 respectively slide along the two second guide rails 142, and the telescopic mechanism 130 slides along the first guide rail 141 to achieve telescoping, thereby further improving the accuracy of the path along which the first guide rail 141 drives the telescopic mechanism 130 to move telescopically along the first direction.

The picking mechanism 170 is disposed on a side of the second telescopic unit 132 away from the first telescopic unit 131. For example, in FIG. 1, the picking mechanism 170 is disposed on a side of the rightmost second telescopic unit 132. In this way, the picking mechanism 170 can move together with the telescopic movement of the telescopic mechanism 130, thereby retrieving a container from a corresponding storage location on a rack or placing a container on the fork assembly 100 onto a corresponding storage location.

In some embodiments, the picking mechanism 170 is, for example, a structure such as a hook claw, a suction cup, or a clamping member. For example, in FIG. 1, the picking mechanism 170 is a hook claw, and the tote may be provided with a structure matching the hook claw, such as a hook ring or a groove, provided that the structure capable of being hooked with the hook claw. In this way, when the telescopic mechanism drives the hook claw to move, the tote at the storage location can be retrieved.

In some other embodiments, the picking mechanism 170 may be a suction cup, to acquire the tote by forming, for example, a negative pressure absorption force between the suction cup and the tote. Alternatively, the picking mechanism 170 may be a clamping member. For example, the clamping member includes two clamping arms. The two clamping arms are disposed opposite to each other and are openable and closable. When a tote needs to be acquired, the two clamping arms are located on opposite sides of the tote and clamp the tote to acquire the tote. Certainly, the picking mechanism 170 may alternatively be another structure capable of acquiring the tote. This is not specifically limited herein.

In some embodiments, referring to FIG. 1, the fork assembly further includes a fixing plate 160. The fixing plate 160 is disposed at one end of the telescopic mechanism 130 away from the mounting plate 120 and pivotally connected to the telescopic mechanism 130. The picking mechanism 170 may be movably disposed on a side of the fixing plate 160 facing away from the telescopic mechanism 130, so that the picking mechanism 170 can move up and down relative to the fixing plate 160. In this way, when the picking mechanism 170, for example, the hook claw, hooks the container, the hook claw may first move up and down, so that the hook claw moves to a position corresponding to an opening of the hook ring or groove on the container. Then, by moving up and down in an opposite direction, the hook claw hooks into the hook ring or groove, so that the hook claw hooks the container onto the fork as the telescopic mechanism 130 retracts.

In an embodiment, the hook claw of the picking mechanism 170 may be bent upward. In some other embodiments, the hook claw of the picking mechanism 170 may alternatively be bent downward.

It can be learned that, in the fork assembly 100 provided in this embodiment of this application, the first drive mechanism 150 drives the first guide rail 141 to move along the second guide rail 142, so that the telescopic mechanism 130 can slide relative to the first guide rail 141 and the second guide rail 142, thereby driving the telescopic mechanism 130 to telescope, simplifying the overall structure for driving the telescopic mechanism 130 to telescope, and reducing costs. In addition, ends of the two first telescopic frames 1311 are rotatably connected to each other and pivotally connected to the mounting plate 120. In this way, a length of the telescopic mechanism 130 in the initial state in the telescopic direction can be reduced, thereby reducing the overall length of the fork assembly 100 avoiding the impact of the fork length on the aisle width in the warehousing space, and further improving the utilization of the warehousing space. Moreover, the guiding structure 140 is provided to guide the telescopic movement of the telescopic mechanism 130 in the first direction, to prevent the telescopic mechanism 130 from laterally deviating during telescoping, thereby improving the stability, reliability, and accuracy of the telescopic mechanism 130 during telescoping, and further improving the reliability of the picking mechanism 170 when hooking a tote.

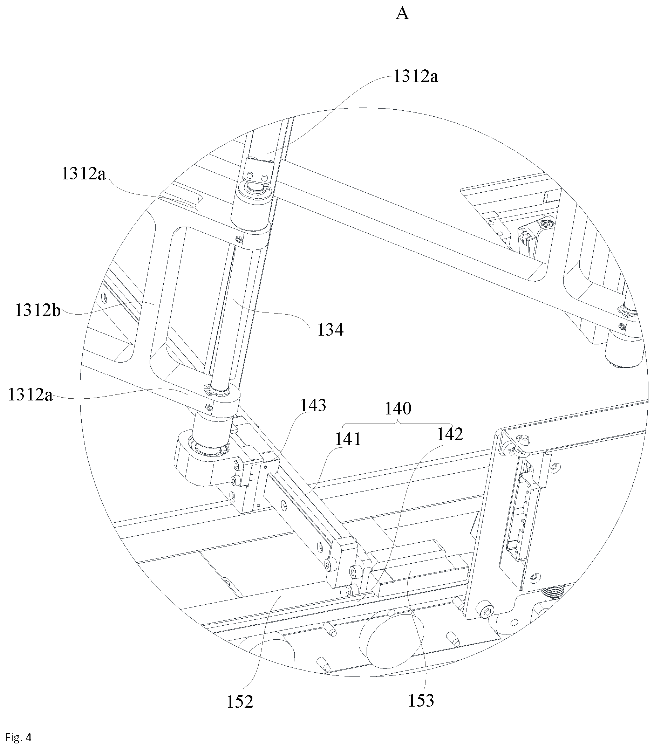

In some embodiments, referring to FIG. 4 to FIG. 6, the first telescopic unit 131 and the second telescopic unit 132 are pivotally connected to each other by the pivot shaft 134. For example, one end of each of the two first telescopic frames 1311 in the first telescopic unit 131 away from the mounting plate 120 is pivotally connected to an adjacent second telescopic frame 1312 by the pivot shaft 134. When at least two second telescopic units 132 are provided, two adjacent second telescopic units 132 are also pivotally connected to each other by the pivot shaft 134.

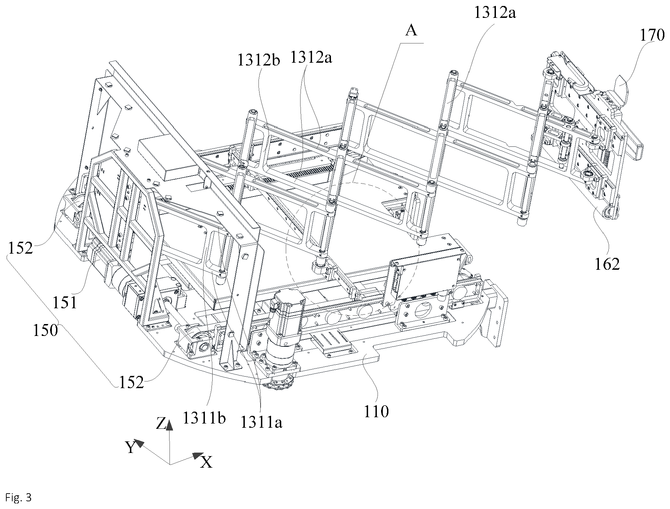

In some embodiments, still referring to FIG. 3, the two first telescopic frames 1311 each include two first links 1311a, and the two first links 1311a are spaced apart and disposed opposite to each other along the second direction. The two second telescopic frames 1312 include two second links 1312a, and the two second links 1312a are spaced apart and disposed opposite to each other along the second direction. The same ends of the two first links 1311a may be connected by one pivot shaft 134, that is, the two first links 1311a are rotatably connected to the pivot shaft 134. In addition, the same ends of the two second links 1312a (that is, the ends both close to or away from the mounting plate 120) may alternatively be pivotally connected to each other by the pivot shaft 134. In addition, the two first links 1311a and the two second links 1312a adjacent to the two first links 1311a are both pivotally connected by one pivot shaft 134, so that the first telescopic frame 1311 and the adjacent second telescopic frame 1312 can rotate relative to each other.

In addition, when the telescopic mechanism 130 includes at least two second telescopic units 132, two second links 1312a in the second telescopic frame 1312 are pivotally connected to two second links 1312a in an adjacent second telescopic frame 1312 by the same pivot shaft 134, so that the two adjacent second telescopic units 132 can rotate relative to each other, thereby achieving telescoping.

In some embodiments, a first connecting rib 1311b is further provided between two first links 1311a in one of the two first telescopic frames 1311, to connect the two first links 1311a together by the first connecting rib 1311b. The first connecting rib 1311b and the corresponding two first links 1311a may be connected by bonding, welding, riveting, threaded connection, or the like. In addition, one, two, or more first connecting ribs 1311b may be provided. For example, in FIG. 2, two first connecting ribs 1311b are provided, and the two first connecting ribs 1311b are respectively disposed at positions on the two first links 1311a close to two ends, thereby improving the overall strength of the first telescopic frame 1311 by means of the first connecting ribs 1311b.

In some other embodiments, the two first links 1311a provided with the first connecting rib 1311b may be formed as an integral structure with the first connecting rib 1311b by casting or injection molding. That is, the two first links 1311a and the first connecting rib 1311b disposed between the two first links 1311a are formed as an integral structure. In this way, the mounting process between the first connecting rib 1311b and the first links 1311a can be reduced, thereby reducing mounting costs.

The other one of the two first telescopic frames 1311 includes two first links 1311a that are independent of each other. This facilitates mounting between the two first telescopic frames 1311, thereby facilitating the assembly, disassembly, and replacement of the first telescopic unit 131.

In addition, in some embodiments, in the two second telescopic frames 1312 in each second telescopic unit 132, two second links 1312a in one second telescopic frame 1312 are formed as an integral structure, and two second links 1312a in the other second telescopic frame 1312 are formed as a structure independent of each other, thereby facilitating the assembly, disassembly, and replacement of the two second telescopic frames 1312.

In an example, a second connecting rib 1312b is provided between two second links 1312a in one second telescopic frame 1312, to connect the two second links 1312a into an integral structure by the second connecting rib 1312b. Two ends of the second connecting rib 1312b may be respectively detachably connected or fixedly connected to the corresponding second links 1312a. For example, two ends of the second connecting rib 1312b are respectively bonded, welded, riveted, threadedly connected, or the like to the corresponding second links 1312a, so that the two second links 1312a are connected as an integral structure by the second connecting rib 1312b.

Alternatively, the second connecting rib 1312b may be formed as an integral structure with the corresponding two second links 1312a by casting or injection molding, thereby reducing the mounting process and reducing process costs.

One, two, or more second connecting ribs 1312b may be provided between the two second links 1312a. For example, in FIG. 2, two second connecting ribs 1312b are provided between the two second links 1312a, and the two second connecting ribs 1312b are spaced apart between the two second links 1312a, to improve the strength of the second telescopic frame 1312.

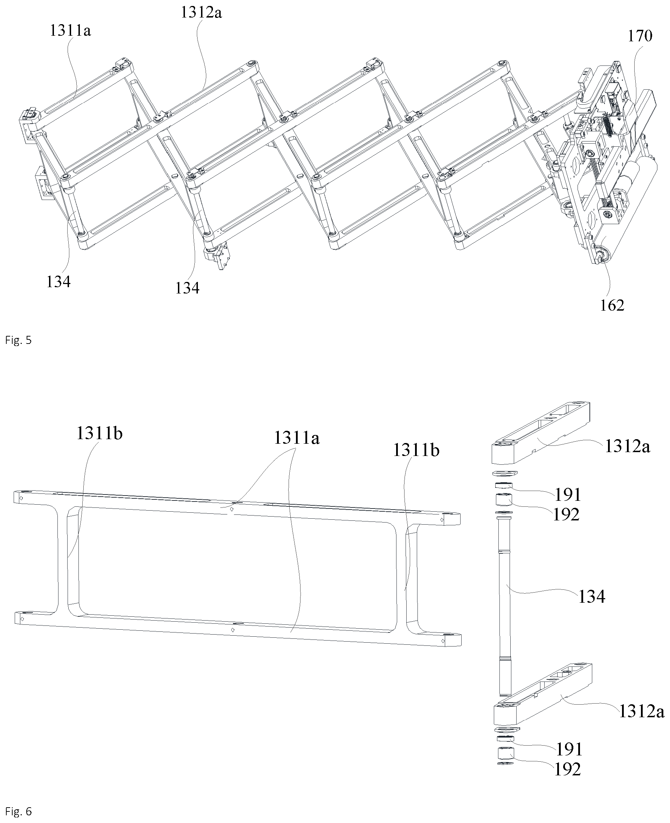

To improve the smoothness of rotation and increase the strength during the pivotal connection between the first link 1311a and the corresponding pivot shaft 134 and between the second link 1312a and the corresponding pivot shaft 134, in this embodiment of this application, referring to FIG. 6, a first bearing 191 and a second bearing 192 are provided between the pivot shaft 134 and at least one of the corresponding first link 1311a and second link 1312a. That is, when the first link 1311a and the second link 1312a are pivotally connected by the pivot shaft 134, for example, the first bearing 191 and the second bearing 192 are provided between the pivot shaft 134 and the corresponding first link 1311a; or the first bearing 191 and the second bearing 192 are provided between the pivot shaft 134 and the corresponding second link 1312a; or the first bearing 191 and the second bearing 192 are provided both between the pivot shaft 134 and the corresponding first link 1311a and between the pivot shaft 134 and the corresponding second link 1312a.

For example, when at least one of the first link 1311a and the second link 1312a is respectively connected to the corresponding pivot shaft 134 by the first bearing 191 and the second bearing 192, the first bearing 191 and the second bearing 192 are sequentially sleeved on the pivot shaft 134. For example, the first bearing 191 is located below the second bearing 192, or the first bearing 191 is located above the second bearing 192, which can be specifically adaptively configured according to actual requirements. The first bearing 191 is configured to bear an axial force, and the second bearing 192 is configured to bear a radial force.

Preferably, the first bearing 191 and the second bearing 192 may alternatively be provided only between the corresponding pivot shaft 134 and the link closer to an outer side of the telescopic mechanism 130 among the first link 1311a and the second link 1312a. For example, in FIG. 6, the second link 1312a is located on an outer side of the first link 1311a, so that the first bearing 191 and the second bearing 192 only need to be provided between the second link 1312a and the corresponding pivot shaft 134. In this way, the smoothness of telescoping can be ensured while costs can be reduced.

In some embodiments, the first bearing 191 is a deep groove ball bearing, and the second bearing 192 is a needle roller bearing. The needle roller bearing includes an outer bearing ring and a needle roller assembly disposed circumferentially on the outer bearing ring. The needle roller assembly is located between the outer bearing ring and the pivot shaft 134. That is, the needle roller bearing has only an outer ring and the needle roller assembly without an inner ring, and is used in cooperation with one deep groove ball bearing. The deep groove ball bearing and the needle roller bearing are sequentially sleeved on the pivot shaft 134. The corresponding first link 1311a or second link 1312a are then sleeved outside the needle roller bearing and the deep groove ball bearing. Since the needle roller bearing can bear a large radial force, the deep groove ball bearing mainly bear an axial force, and the needle roller bearing without an inner ring can have a large rated load while ensuring a small radial dimension. Therefore, the pivot point is capable of bearing a large radial load without increasing a radial dimension of the corresponding first link 1311a or second link 1312a, thereby improving the reliability of the telescopic mechanism 130 when pushing and pulling a tote.

In addition, a bushing is omitted between the deep groove ball bearing and the pivot shaft 134 and between the needle roller bearing and the pivot shaft 134. Since rolling friction is formed between the needle roller bearing or the deep groove ball bearing and the pivot shaft 134, but sliding friction is formed between the bushing and the pivot shaft 134, and materials generally used for bearings have better wear resistance than those used for bushings, omitting the bushing can reduce the frictional resistance at the pivot point.

It should be noted that the first bearing 191 and the second bearing 192 may be provided at each pivot point between the first link 1311a and the corresponding pivot shaft 134 and between the second link 1312a and the corresponding pivot shaft 134, which may be specifically adaptively designed according to actual requirements and is not limited herein.

Certainly, when at least two second telescopic units 132 are provided, two adjacent second telescopic units 132 are also pivotally connected by the pivot shaft 134, and the first bearing 191 and the second bearing 192 are provided between the pivot shaft 134 and the second link 1312a in at least one of the two second telescopic units 132. Preferably, along the telescopic direction of the telescopic mechanism 130, the first bearing 191 and the second bearing 192 may alternatively be only provided between the corresponding pivot shaft 134 and the second link 1312a closer to the outer side of the telescopic mechanism 130 among two adjacent second links 1312a. In this way, the smoothness of telescoping can be ensured while costs can be reduced.

In addition, the second telescopic unit 132 is also pivotally connected to the fixing plate 160 by the pivot shaft 134, and the first bearing 191 and the second bearing 192 may also be provided between the corresponding pivot shaft 134 and at least one of the second telescopic unit 132 and the fixing plate 160.

In other words, the structures of the pivot shafts 134 (and the bearings) between two adjacent second telescopic units 132 and between the second telescopic unit 132 and the fixing plate 160 are the same as those of the pivot shafts 134 (and the bearings) described above and are not described herein again.

In some embodiments, still referring to FIG. 3 and FIG. 4, the guiding structure 140 further includes a sliding member 143. For example, one or two sliding members 143 are provided. When one sliding member 143 is provided, the sliding member 143 is connected to one pivot shaft 134 corresponding to one end of the second telescopic unit 132. When two sliding members 143 are provided, the two sliding members 143 are respectively connected to the two pivot shafts 134 corresponding to the same ends (that is, the ends both close to or away from the mounting plate 120) of the second telescopic unit 132. That is, one sliding member 143 is disposed on one pivot shaft 134, and the two sliding members 143 are slidably connected to the first guide rail 141. In this way, when the first drive mechanism 150 drives the first guide rail 141 to move along the first direction, and the first guide rail 141 drives, through the sliding member 143, the pivot shaft 134 connected to the first guide rail 141 to move along the first direction, the sliding member 143 slides on the corresponding first guide rail 141, thereby causing the telescopic mechanism 130 to telescope.

For example, in FIG. 4, a side of the sliding member 143 facing the first guide rail 141 is provided with a sliding groove matching the first guide rail 141, and the first guide rail 141 is located within the sliding groove, so that the sliding member 143 can slide along the first guide rail 141.

In some embodiments, still referring to FIG. 3, the first drive mechanism 150 includes a first drive motor 151 and a flexible assembly 152. The flexible assembly 152 is, for example, located on a side of the telescopic mechanism 130 and disposed on the base 110. In this way, the first drive motor 151 is connected to the flexible assembly 152, and the flexible assembly 152 is connected to the first guide rail 141. The first drive motor 151 transmits power to the first guide rail 141 through the flexible assembly 152, so that the first guide rail 141 can telescopically move along the first direction.

In some embodiments, the first drive mechanism 150 may include two flexible assemblies 152. The two flexible assemblies 152 are respectively located on opposite sides of the telescopic mechanism 130 and disposed on the base 110. The two flexible assemblies 152 are connected to the first drive motor 151. In this way, the first drive motor 151 can synchronously drive, through two sets of flexible assemblies 152, the first guide rail 141 to move along the first direction, thereby improving the movement reliability of the first guide rail 141, and further improving the telescopic reliability of the telescopic mechanism.

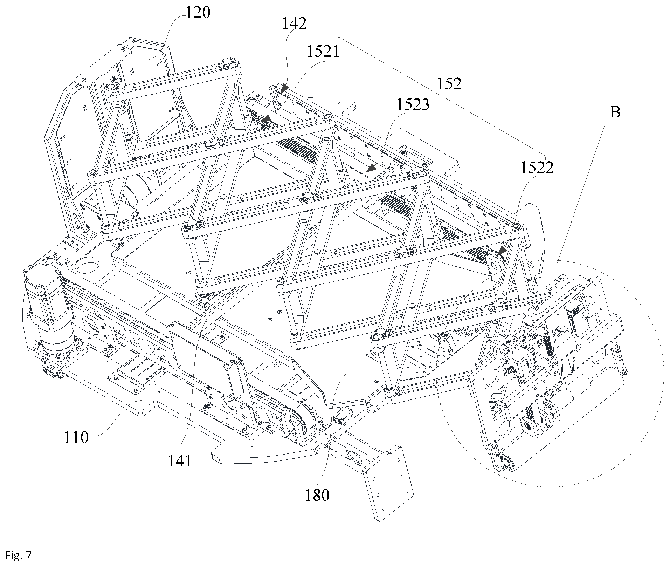

For example, referring to FIG. 7, each flexible assembly 152 includes, for example, a driving pulley 1521, a driven pulley 1522, and a transmission belt 1523. The driving pulley 1521 and the driven pulley 1522 are spaced apart in the first direction, and the transmission belt 1523 is sleeved on the driving pulley 1521 and the driven pulley 1522. In this way, when the first drive motor 151 drives the driving pulley 1521 to rotate, the driving pulley 1521 may drive the transmission belt 1523 to move, and the transmission belt 1523 drives the driven pulley 1522 to rotate about an axis of the driven pulley 1522. Forward rotation and reverse rotation of the first drive motor 151 may cause the flexible assembly 152 to move in opposite directions, causing the transmission belt 1523 to move in opposite directions. The first guide rail 141 is connected to the transmission belt 1523, thereby achieving extension or retraction of the telescopic mechanism 130.

For example, in FIG. 3, the first drive motor 151 is located at a middle position at one end of the base 110 close to the mounting plate 120. The first drive motor 151 transmits, through output shafts at two ends, power to the two sets of flexible assemblies 152 located on the opposite sides of the first drive motor 151, to provide power to the flexible assemblies 152, so that the flexible assemblies 152 drive the telescopic mechanism 130 to telescopically move along the first direction. In this way, telescoping of the telescopic mechanism 130 can be achieved using only one drive motor, resulting in a simple structure and low cost.

The first drive motor 151 is, for example, a 400 W servo motor. When the first drive motor 151 operates, the first drive motor 151 drives, through the transmission belt 1523 in the flexible assemblies 152 on both sides, a pivot shaft 134 at one end of one second telescopic unit 132 to move along the first direction. During the movement, an angle between two telescopic frames in each telescopic unit continuously increases or decreases, and the pivot shafts 134 on both sides are passively moved toward the middle or two ends, so that the telescopic mechanism 130 slides along the second guide rails 142 on both sides through two ends of the first guide rail 141, thereby achieving telescoping of the telescopic mechanism 130.

In some embodiments, referring to FIG. 4 and FIG. 7, the first guide rail 141 includes a guide rod, a guide shaft, or a structure having a guide protrusion or a guide groove extending along the second direction. Pivot shafts 134 at the same end of one second telescopic unit 132 are respectively slidably connected to the first guide rail 141 through sliding members 143 matching the first guide rail 141. For example, in FIG. 4, the first guide rail 141 is a guide rod, a guide protrusion extending along the second direction is provided on a side of the guide rod facing the sliding member 143, the sliding member 143 has a sliding groove matching the guide protrusion. The guide protrusion is located within the sliding groove, so that when the first guide rail 141 moves along the first direction under a driving force, the sliding member 143 slides along the first guide rail 141. In addition, the second guide rail 142 includes a guide rod, a guide shaft, or a structure having a guide protrusion or a guide groove extending along the first direction. A structure of one end of the first guide rail 141 matches the second guide rail 142, so that the first guide rail 141 is slidably connected to the second guide rail 142. For example, the second guide rail 142 is a guide rod, and one end of the first guide rail 141 has a guide groove matching the guide rod. In this way, the guide rod is located within the guide groove, so that the first guide rail 141 can slide along the second guide rail 142 under an external driving force.

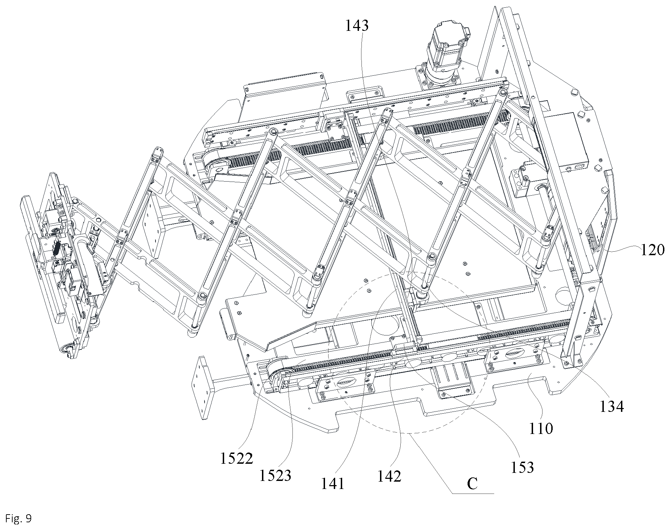

In some embodiments, still referring to FIG. 3, FIG. 4, FIG. 9, and FIG. 10, a connecting member 153 is further included. The connecting member 153 is connected to the first guide rail 141 and fixedly connected to the transmission belt 1523. The connecting member 153 is, for example, a connecting block or a connecting plate. The connecting member 153 is fixedly connected to the first guide rail 141, and is fixedly connected to the transmission belt 1523 by threaded fasteners such as bolts, so that when the transmission belt 1523 moves, the first guide rail 141 is driven to move along the second guide rail 142, thereby achieving telescoping of the telescopic mechanism 130.

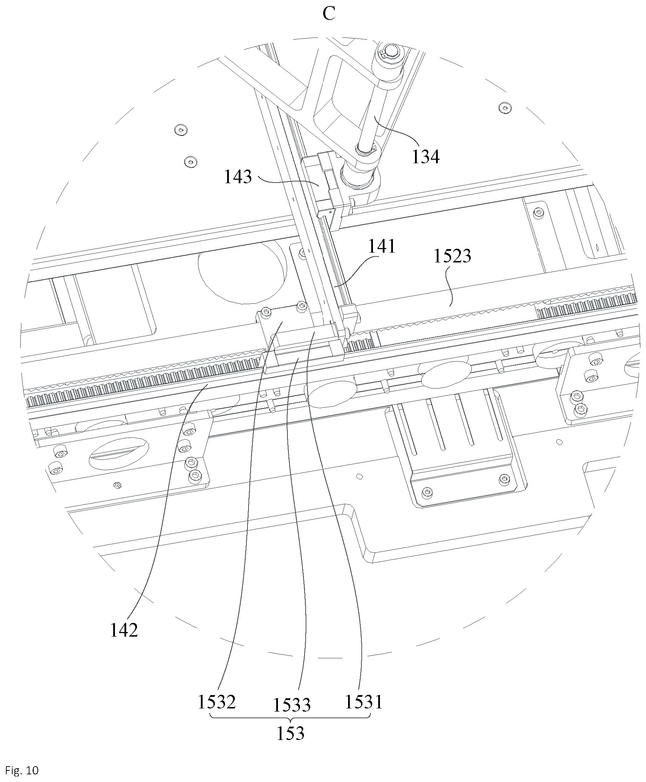

In some embodiments, referring to FIG. 10, the connecting member 153 is slidably connected to the second guide rail 142. That is, the first guide rail 141 is slidably connected to the second guide rail 142 by the connecting member 153 while being fixedly connected to the transmission belt 1523 by the connecting member 153, so that when the transmission belt 1523 moves, the first guide rail 141 is driven, through the connecting member 153, to move along the second guide rail 142.

In some embodiments, still referring to FIG. 10, the connecting member 153 includes a connecting body 1531, and a connecting portion 1532 and a sliding portion 1533 that are disposed on the connecting body 1531. The connecting body 1531 is connected to the first guide rail 141. The connecting portion 1532 is fixedly connected to the transmission belt 1523 by a threaded fastener. A side of the sliding portion 1533 facing the second guide rail 142 is provided with a sliding groove matching the second guide rail 142. The sliding portion 1533 is slidably connected to the second guide rail 142 through the sliding groove.

In some embodiments, referring to FIG. 4, the connecting member 153 is slidably connected to the second guide rail 142. For example, the second guide rail 142 is a guide rod, and a side of the connecting member 153 facing the second guide rail 142 is provided with a guide groove matching the guide rod. In this way, the connecting member 153 is slidably connected to the second guide rail 142 through the guide groove, thereby improving the reliability of the sliding connection between the first guide rail 141 and the second guide rail 142.

In some embodiments, the connecting member 153 may be detachably connected to the first guide rail 141 by snap fitting or threaded connection. In this way, the connecting member 153 can be disassembled for maintenance or replacement, thereby improving the interchangeability of components in the fork assembly 100.

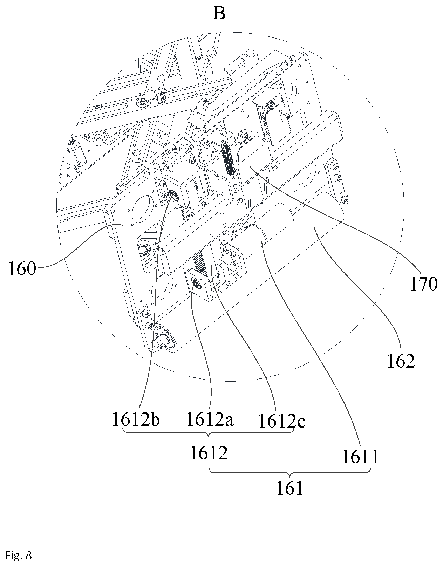

In some embodiments, referring to FIG. 7 and FIG. 8, a second drive mechanism 161 is further included. The second drive mechanism 161 is disposed on the side of the fixing plate 160 facing away from the telescopic mechanism 130, and the second drive mechanism 161 is configured to drive the picking mechanism 170 to move up and down relative to the fixing plate 160. The picking mechanism 170 is, for example, a picking mechanism 170 bent upward. The picking mechanism 170 may move up and down relative to the fixing plate 160 along a third direction. Therefore, when the telescopic mechanism 130 drives the picking mechanism 170 to extend to a position of a corresponding to-be-picked tote, the second drive mechanism 161 drives the picking mechanism 170 to move downward, so that the picking mechanism 170 moves to an opening of a groove on the tote that corresponds to the picking mechanism 170, and the second drive mechanism 161 drives the picking mechanism 170 to move upward, to cause the picking mechanism 170 to hook into the groove of the tote. Then, the first drive mechanism 150 drives the telescopic mechanism 130 to retract, to pull the tote onto the fork. The third direction is perpendicular to both the first direction and the second direction.

In some embodiments, the second drive mechanism 161 includes a second drive motor 1611 and a lifting unit 1612. The lifting unit 1612 is connected to the second drive motor 1611. The picking mechanism 170 is connected to the lifting unit 1612. The second drive motor 1611 is configured to provide power to the lifting unit 1612. The lifting unit 1612 is configured to drive the picking mechanism 170 to move up and down relative to the fixing plate 160. For example, referring to FIG. 8, the lifting unit 1612 includes, for example, a driving belt pulley 1612a, a driven belt pulley 1612b, and a conveyor belt 1612c. The driving belt pulley 1612a and the driven belt pulley 1612b are spaced apart along the third direction (for example, along the direction Z) on a side of the fixing plate 160 away from the telescopic mechanism 130. The conveyor belt 1612c is sleeved on the driving belt pulley 1612a and the driven belt pulley 1612b, and an output shaft of the second drive motor 1611 is connected to the driving belt pulley 1612a, to drive the driving belt pulley 1612a to rotate, thereby driving the conveyor belt 1612c to move up and down through the driving belt pulley 1612a. The picking mechanism 170 is connected to the conveyor belt 1612c, so that the picking mechanism 170 can move up and down.

In addition, the telescopic mechanism 130 extends from an initially retracted state, with an extension length, for example, being approximately 1.1 m. After the telescopic mechanism 130 extends, a rear end of the telescopic mechanism 130 (that is, the end close to the picking mechanism 170) may slightly sag.

To keep a height of the rear end of the telescopic mechanism 130 consistent with that of a front end of the telescopic mechanism 130 (for example, the end close to the mounting plate 120), in this embodiment of this application, referring to FIG. 7 and FIG. 8, the fork assembly 100 further includes a support member 162. The support member 162 is disposed at a bottom of the fixing plate 160. In this way, the support member 162 can abut against a bearing surface corresponding to the to-be-picked tote, thereby providing a support force to the end of the telescopic mechanism 130 close to the fixing plate 160 by using the support member 162, to avoid sagging of the rear end of the telescopic mechanism 130. This can avoid poor hooking of the picking mechanism 170 into the groove on the tote caused by the sagging of the rear end of the telescopic mechanism 130, thereby improving the reliability and accuracy of the fork assembly 100 when hooking the tote.

In some embodiments, the support member 162 may be a rotary support member. A rotary axis of the rotary support member extends along the second direction, a jointing member is provided on each of opposite sides of the fixing plate 160 close to the bottom, and two ends of the rotary support member 162 are respectively rotatably connected to the corresponding jointing members, to enable the rotary support member to rotate about the axis of the rotary support member. For example, the support member 162 is a roller. In this way, when the telescopic mechanism 130 drives the fixing plate 160 at the rear end to move telescopically, the support member 162 can roll relative to a bearing surface supporting the fixing plate 160, thereby reducing the frictional resistance between a bearing member and the bearing surface.

It may be understood that, the fork assembly 100 further includes a tray 180. The tray 180 is disposed on the base 110 and located below the telescopic mechanism 130. A preset spacing is provided between the tray 180 and the telescopic mechanism 130. The tray 180 is configured to receive the tote hooked by the picking mechanism 170. That is, after the picking mechanism 170 hooks the tote, the tote is pulled onto the tray 180 as the telescopic mechanism 130 retracts.

In this embodiment of this application, by providing the corresponding spacing between the tray 180 and the telescopic mechanism 130, when a tote needs to be hooked, the telescopic mechanism 130 only needs to enter a storage location corresponding to the tote, and the tray 180 does not need to enter the storage location. In this way, an overall height at which the fork assembly 100 enters the storage location corresponding to the tote can be reduced, thereby reducing the clearance of upper levels of a rack. That is, the height of the storage location only needs to accommodate the tote, thereby improving the space utilization of the warehousing space. In addition, since the tray 180 is designed to be separated from the telescopic mechanism 130, the tray 180 does not need to enter a storage location on the rack when hooking the tote, so that the tray 180 can always remain flush with a rack shelf. After hooking the tote, the picking mechanism 170 can directly pull the tote back onto the tray 180, thereby reducing picking and placing time and improving picking and placing efficiency.

In addition, since both the first drive motor 151 and the second drive motor 1611 need to be powered, a wiring path between a front end and a rear end of the fork assembly 100 may be routed along a path of an adjacent telescopic frame in the telescopic mechanism 130, for example, in a Z-shape, so that the wiring between the front end and the rear end has sufficient slack. In this way, the wiring can be prevented from being affected by the telescoping of the telescopic mechanism 130, thereby improving the reliability of the wiring.

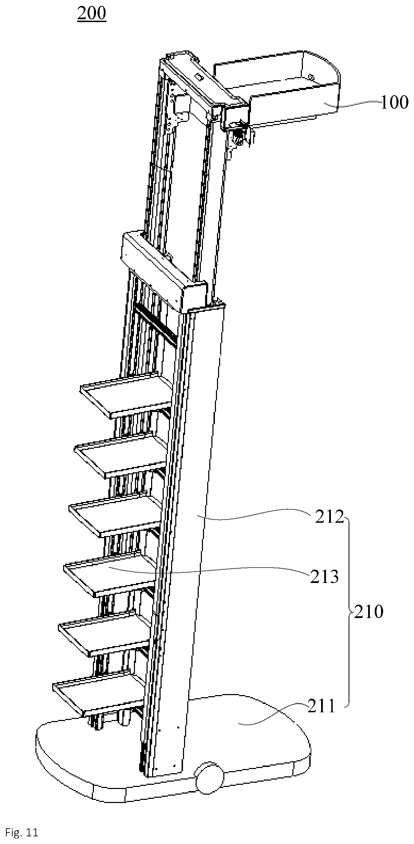

FIG. 11 is a schematic structural diagram of a transport robot according to an embodiment of this application. Referring to FIG. 11, this embodiment of this application further provides a transport robot 200. The transport robot 200 includes a robot body 210 and a fork assembly 100 disposed on the robot body 210. The robot body 210 includes, for example, a chassis 211, a support frame 212 disposed on the chassis, and a pallet plate 213 and a lifting assembly (not shown in the figure) that are disposed on the support frame 212. The lifting assembly and the fork assembly 100 are both disposed on the support frame 212, and the lifting assembly may drive the fork assembly 100 to move up and down relative to the support frame 212, so that the fork assembly 100 can place a tote onto storage locations at different heights of a rack, or retrieve totes from storage locations at different heights of a rack.

It may be understood that, the chassis may move, for example, on the ground, so that the transport robot 200 can reach different positions to meet transport requirements. In addition, the support frame 212 is a support foundation for structures such as the fork assembly 100, the lifting assembly, and the pallet plate 213. A plurality of pallet plates 213 may be provided. The pallet plates 213 are spaced apart on the support frame 212 along a vertical direction of the support frame 212. The pallet plates 213 are configured to temporarily store totes, so that the transport robot 200 can transport a plurality of totes in a single transport process, thereby improving transport efficiency.

The lifting assembly, for example, may include a drive motor and a conveyor belt assembly connected to the drive motor. This is not specifically limited.

In addition, the structure and working principle of the fork assembly 100 have been described in detail in the foregoing embodiments, and details are not described herein again.

An embodiment of this application further provides a warehousing system, including a rack and the transport robot provided in the foregoing embodiment.

The rack includes, for example, a plurality of storage locations, and the transport robot is, for example, the transport robot provided in the foregoing embodiment.

According to the fork assembly, the transport robot, and the warehousing system provided in the embodiments of this application, a guiding structure is provided to guide the telescopic movement of the telescopic mechanism in a first direction, to prevent the telescopic mechanism from laterally deviating during telescoping, thereby improving the stability, reliability, and accuracy of the telescopic mechanism during telescoping, reducing shaking, and further improving the reliability of the picking mechanism when picking up a tote.

Each embodiment or implementation of this specification is described in a progressive manner, each embodiment focuses on the difference from other embodiments, and the same and similar parts between the embodiments may refer to each other.

In the descriptions of this specification, the descriptions of the reference terms such as "an implementation", "some implementations", "an exemplary implementation", "example", "specific example", or "some examples" means that the specific features, structures, materials, or characteristics described with reference to the implementation or example are included in at least one implementation or example of this application. In this specification, schematic descriptions of the foregoing terms do not necessarily refer to a same implementation or example. In addition, the described specific features, structures, materials, or characteristics may be combined in a proper manner in any one or more implementations or examples.

Finally, it should be noted that the foregoing embodiments are merely used for describing the technical solutions of this application, but are not intended to limit this application. Although this application is described in detail with reference to the foregoing embodiments, it should be understood by a person of ordinary skill in the art that, modifications may still be made to the technical solutions in the foregoing embodiments, or equivalent replacements may be made to some or all of the technical features; and these modifications or replacements do not cause the essence of corresponding technical solutions to depart from the scope of the technical solutions in the embodiments of this application.

## Claims

1. A fork assembly, comprising:
a base;
a mounting plate disposed on the base;
a telescopic mechanism comprising a first telescopic unit and at least one second telescopic unit that are sequentially pivotally connected, wherein the first telescopic unit comprises two first telescopic frames, one end of each of the two first telescopic frames being pivotally connected to the mounting plate; and the second telescopic unit comprises two second telescopic frames, middle portions of the two second telescopic frames being pivotally connected to each other;
a guiding structure comprising a first guide rail and a second guide rail, wherein the second guide rail is connected to the base and extends along a first direction, and the first guide rail extends along a second direction and is slidably connected to the second guide rail; and the second telescopic unit is slidably connected to the first guide rail, wherein the first direction and the second direction are perpendicular to each other;
a first drive mechanism connected to the first guide rail, wherein the first drive mechanism is configured to drive the first guide rail to move along the second guide rail, and cause the second telescopic unit to slide along the first guide rail, to drive the telescopic mechanism to telescope along the first direction; and
a picking mechanism disposed on a side of the second telescopic unit facing away from the first telescopic unit.

2. The fork assembly according to claim 1, wherein ends of the two first telescopic frames close to the mounting plate are pivotally connected to each other.

3. The fork assembly according to claim 2, wherein one end of each of the first telescopic frames away from the mounting plate is pivotally connected to an adjacent second telescopic frame through a pivot shaft.

4. The fork assembly according to claim 3, wherein the first telescopic frame comprises two first links, the two first links being spaced apart and disposed opposite to each other along a third direction, and one end of each of the two first links being connected by the pivot shaft; and
the second telescopic frame comprises two second links, the two second links being spaced apart and disposed opposite to each other along the third direction, and one end of each of the two second links being connected by the corresponding pivot shaft.

5. The fork assembly according to claim 4, wherein one of the first telescopic frames in the first telescopic unit further comprises a first connecting rib, the connecting rib being connected between the two first links, and the first connecting rib and the corresponding two first links being formed as an integral structure.

6. The fork assembly according to claim 4, wherein one of the second telescopic frames in each of the second telescopic unit further comprises a second connecting rib, the second connecting rib being connected between the two second links, and the second connecting rib and the corresponding two second links being formed as an integral structure.

7. The fork assembly according to claim 4, wherein a first bearing and a second bearing are provided between the pivot shaft and at least one of the corresponding first link and second link, the first bearing and the second bearing being sleeved on the pivot shaft in sequence, the first bearing being configured to bear an axial force, and the second bearing being configured to bear a radial force.

8. The fork assembly according to claim 7, wherein the first bearing is a deep groove ball bearing, and the second bearing is a needle roller bearing or a ball bearing.

9. The fork assembly according to any one of claims 3 to 8, wherein the guiding structure further comprises a sliding member, the sliding member being connected to the pivot shaft corresponding to one end of the second telescopic unit, and the sliding member being slidably connected to the first guide rail.

10. The fork assembly according to claim 9, wherein the first drive mechanism comprises a first drive motor and a flexible assembly, the first drive motor being connected to the flexible assembly, the flexible assembly being connected to the first guide rail, and the first drive motor being configured to drive, through the flexible assembly, the first guide rail to move along the first direction.

11. The fork assembly according to claim 10, wherein the flexible assembly comprises a driving pulley, a driven pulley, and a transmission belt, the driving pulley and the driven pulley being spaced apart along the first direction, the transmission belt being sleeved on the driving pulley and the driven pulley, the first drive motor being connected to the driving pulley, and the first guide rail being connected to the transmission belt, to cause the first guide rail to move along the first direction together with the transmission belt.

12. The fork assembly according to claim 11, further comprising: a connecting member, wherein the connecting member is connected to the first guide rail and fixedly connected to the transmission belt.

13. The fork assembly according to claim 12, wherein the connecting member is slidably connected to the second guide rail.

14. The fork assembly according to claim 10, wherein the guiding structure comprises two second guide rails, the two second guide rails being respectively disposed on opposite sides of the telescopic mechanism, and the first guide rail being slidably connected to the two second guide rails.

15. The fork assembly according to claim 14, wherein the first drive mechanism comprises two flexible assemblies, the two flexible assemblies being respectively located on both sides of the telescopic mechanism and connected to the first drive motor, and two ends of the first guide rail being respectively connected to the two flexible assemblies, to cause the two flexible assemblies to synchronously drive the first guide rail to move relative to the second guide rail.

16. The fork assembly according to any one of claims 1 to 8, further comprising a fixing plate, wherein the fixing plate is disposed at one end of the telescopic mechanism away from the mounting plate and pivotally connected to the telescopic mechanism, and the picking mechanism is disposed on a side of the fixing plate facing away from the telescopic mechanism.

17. The fork assembly according to claim 16, wherein the picking mechanism is movably disposed on the fixing plate, to enable the picking mechanism to move up and down relative to the fixing plate.

18. The fork assembly according to claim 17, wherein the picking mechanism comprises one of a hook claw, a suction cup, or a clamping member.

19. The fork assembly according to claim 17, further comprising a second drive mechanism, wherein the second drive mechanism is disposed on the side of the fixing plate facing away from the telescopic mechanism, and the second drive mechanism is configured to drive the picking mechanism to move up and down relative to the fixing plate.

20. The fork assembly according to claim 19, wherein the second drive mechanism comprises a second drive motor and a lifting unit, the lifting unit being connected to the second drive motor, the picking mechanism being connected to the lifting unit, the second drive motor being configured to provide power to the lifting unit, and the lifting unit being configured to drive the picking mechanism to move up and down relative to the fixing plate.

21. The fork assembly according to claim 16, further comprising a support member, wherein the support member is disposed at a bottom of the fixing plate and configured to abut against a bearing surface corresponding to a to-be-picked tote, to provide a support force to one end of the telescopic mechanism close to the fixing plate.

22. The fork assembly according to claim 21, wherein the support member is a rotary support member, a rotary axis of the rotary support member extending along the second direction, jointing members being provided at opposite sides of the fixing plate close to the bottom, and two ends of the rotary support member being respectively rotatably connected to the corresponding jointing members, to enable the rotary support member to rotate about an axis of the rotary support member.

23. The fork assembly according to claim 22, wherein the support member is a roller or a wheel.

24. The fork assembly according to any one of claims 1 to 8, further comprising a tray, wherein the tray is disposed on the base and located below the telescopic mechanism, a preset spacing is maintained between the tray and the telescopic mechanism, and the tray is configured to receive a tote acquired by the picking mechanism.

25. A transport robot, comprising: a robot body, and the fork assembly according to any one of claims 1 to 24, wherein the fork assembly is disposed on the robot body.

26. A warehousing system, comprising the transport robot according to claim 25.
